(19) Europäisches Patentamt
European Patent Office
Office européen des brevets

(11) Veröffentlichungsnummer : **0 049 748**
**B1**

(12) **EUROPÄISCHE PATENTSCHRIFT**

(45) Veröffentlichungstag der Patentschrift : **21.03.84**

(51) Int. Cl.³ : **C 09 C 1/26**

(21) Anmeldenummer : **81106246.2**

(22) Anmeldetag : **11.08.81**

(54) **Eisenblau-Pigment, Verfahren zur Herstellung desselben und Verwendung.**

(30) Priorität : **10.10.80 DE 3038285**

(43) Veröffentlichungstag der Anmeldung : **21.04.82 Patentblatt 82/16**

(45) Bekanntmachung des Hinweises auf die Patenterteilung : **21.03.84 Patentblatt 84/12**

(84) Benannte Vertragsstaaten : **BE DE FR GB IT NL**

(56) Entgegenhaltungen :
**DE-A- 2 453 014**
**DE-A- 2 638 228**
**Die Akte enthält technische Angaben, die nach dem Eingang der Anmeldung eingereicht wurden und die nicht in dieser Patentschrift enthalten sind.**

(73) Patentinhaber : **Degussa Aktiengesellschaft**
**Weissfrauenstrasse 9**
**D-6000 Frankfurt am Main 1 (DE)**

(72) Erfinder : **Gratzfeld, Everhard**
**Kleiststrasse 8**
**D-5047 Wesseling (DE)**
Erfinder : **Clausen, Eva**
**Gartenstrasse 43**
**D-5000 Köln 50 (DE)**
Erfinder : **Reinhardt, Helmut, Dr.**
**Auf dem Stumpelrott 9**
**D-5000 Köln 50 (DE)**
Erfinder : **Schaefer, Hans, Dr.**
**Liesingstrasse 10**
**D-6450 Hanau (DE)**

EP 0 049 748 B1

Anmerkung : Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

Jouve, 18, rue St-Denis, 75001 Paris, France

# Eisenblau-Pigment, Verfahren zur Herstellung desselben und Verwendung

Eisenblau-Pigment (DIN 55 906) ist bekannt unter der Bezeichnung Berliner-, Pariser-, Preussisch-, Milori-, Stahl-, Ferrocyan- und Bronzeblau. In der angelsächsischen Literatur wird Eisenblau-Pigment auch als iron blue bezeichnet (Ullmann's Enzyklopädie der technischen Chemie, 4. Auflage, 18. Band, Seite 623 ff.).

Eisenblau-Pigment wird in der Druck- und Lackfarbenindustrie und für die Anfärbung von Fungiziden wegen seiner hohen Farbintensität und seines gegenüber organischen Pigmenten geringen Preises geschätzt.

Charakteristische Daten eines qualitativ hochwertigen Eisenblau-Pigmentes sind :

hohe Farbintensität,
gute Dispergierbarkeit,
reiner Farbton,
günstiges rheologisches Verhalten,
geringe Reaktionsfähigkeit,
ausreichende Stabilität gegenüber reduzierenden Substanzen.

Wenn ein Eisenblau-Pigment über alle diese Eigenschaften gleichermaßen verfügt, ist es für die pigmentverarbeitende Industrie von besonderer Bedeutung.

Einsenblau-Pigment ist ein Alkaliferriferrocyanid der allgemeinen Formel Me(I)Fe(III) Fe(II) $(CN)_6 \cdot H_2O$, wobei Me(I) = einwertiges Alkalimetallion ist.

Die Herstellung Einsenblau-Pigmentes erfolgt durch Fällung aus Hexacyanoferrat (II)-Lösungen und Eisen(II) salz-Lösungen über den sogenannten Weißteig oder Berliner Weiß der allgemeinen Formel $Me(I)_2Fe(II)$ Fe(II) $(CN)_6 \cdot H_2O$, der gegebenenfalls unter Zusatz von Alkalimetallsalzen nach einer Wärmebehandlung (Alterung) oxidiert wird.

Farbtechnischen Charakter und damit praktische Bedeutung für die pigmentverarbeitende Industrie haben nur solche Eisenblau-Pigment-Verbindungen, die als Alkalimetall überwiegend Kalium und/oder Ammoniumionen im Molekül enthalten.

Eisenblau-Pigmente, die nur über Natrium und Ammonium im Molekül verfügen, haben fast nie den reinen Farbton der Eisenblau-Pigmente, die Kalium enthalten.

Bei bekannten Verfahren geht man bei der Eisenblau-Pigment-Herstellung im wesentlichen von Kaliumferrocyanid als Rohstoff aus. Immer mehr versucht man jedoch aus Kostengründen, Kaliumferrocyanid durch Natriumferrocyanid zu ersetzen. Bei Einsatz von Natriumferrocyanid gibt man Kali- und/oder Ammoniumsalze bei der Weißteigfällung und Alterung zu. Durch verschärfte Umweltschutzgesetze ist in enigen Ländern die Verwendung von Ammoniumsalzen problematisch, weil das Abwasser keine oder nur minimale Mengen $NH_4$-Ionen enthalten darf.

Um einen Teil des teuren Kaliumferrocyanides durch das billigere Natriumsalz zu ersetzen, ist es bekannt Kalium- und Natriumferrocyanide zu mischen oder bei der Herstellung dieser Rohstoffe die entsprechenden Alkalien einzusetzen und so Kalium- und Natriumionen enthaltende Ferrocyanidlösungen zu gewinnen (vgl. DE-OS 24 53 014).

Dem Mischungsverhältnis sind nach bisherigen Erfahrungen Grenzen gesetzt. So muß der Anteil an Kaliumferrocyanid mindestens 50 Mol-Prozent betragen (bei 50 Mol-Prozent Natriumferrocyanid), um Eisenblau-Pigmente bestimmter Farbstärke zu erzielen, und bei der Alterung müssen außerdem noch Kalisalze zugesetzt werden. Ein geringerer Anteil an Kaliumferrocyanid ergibt minderwertige Qualitäten des Eisenblau-Pigmentes. Für besonders farbstarke Sorten beträgt der Anteil an Kaliumferrocyanid mindestens 70 Mol-Prozent (bei 30 Mol-Prozent Natriumferrocyanid). Bestimmte Spezialsorten können nur aus Kaliumferrocyanid hergestellt werden.

Gegenstand der Erfindung ist ein Eisenblau-Pigment, gekennzeichnet durch einen Gehalt an Kalium von 7,0 bis 9,0 Gew.-%, vorzugsweise 7,6 bis 9,0 Gew.-%, einen Gehalt an Natrium von 0,5 bis 2,0 Gew.-%, vorzugsweise 0,5 bis 1,5 Gew.-% ; eine Farbstärke nach DIN 53 204 und DIN 53 234 von 5 bis 15 % über dem Standard Vossenblau 705 und die Farbabstände (bestimmt nach DIN 53 204 und DIN 53 234 in Verbindung mit DIN 6174 bezogen auf Vossenblau 705 als Standard) :

ΔL : – 0,7 bis – 1,5
Δa : – 0,5 bis + 1,3
Δb : – 0,6 bis – 2,3
ΔC : + 0,5 bis + 2,0

Das Eisenblau-Pigment Vossenblau 705 ist in Ullmann's Enzyklopädie der technischen Chemie, 4. Auflage, Band 18 Seite 623 beschrieben. Es ist im Handel erhältlich bei der Degussa AG, Weißfrauenstraße 9 6000 Frankfurt 1.

Das erfindungsgemäße Eisenblau-Pigment kann einen Restwassergehalt von ca. 3,5 Gew.-% (ermittelt nach DIN 53 198) und einen CN-Gehalt von ca. 44 Gew.-% (ermittelt nach der Methode Feld) aufweisen.

Ein weiterer Gegenstand der Erfindung ist ein Verfahren zur Herstellung des Eisenblau-Pigmentes

mittels Weißteigfällung und nachfolgender Oxidation des Weißteiges, welches dadurch gekennzeichnet ist, daß man die Weißteigfällung unter Verwendung von Alkali-Ionen, Cyanid-Ionen- oder komplexen Eisencyanid-Ionen und Eisen-Ionen in zwei Phasen durchführt, wobei man in der ersten Phase der Weißteigfällung als Alkali-Ionen Kalium-Ionen und in der zweiten Phase als Alkali-Ionen Natrium-Ionen zusetzt, die so erhaltene Weißteigsuspension mit Wasser verdünnt, die überstehende Lösung abdekantiert, Kaliumsalze hinzugibt, die Suspension bis zum Siedepunkt erhitzt, diese Temperatur eine Zeit lang hält, dann abkühlt, anorganische Säure in Form einer wässrigen Lösung und Oxidationsmittel in Form einer wässrigen Lösung hinzugibt, nach der Oxidation das Eisenblau-Pigment von der Lösung abtrennt und nach bekannten Verfahren aufarbeitet.

Bei der ersten Phase sowie in der zweiten Phase kann die Temperatur der Lösungen so aufeinander abgestimmt sein, daß die erhaltene Mischung eine Temperatur von 20 bis 60 °C, vorzugsweise 30 bis 50 °C, aufweist.

Als anorganische Säure kann man Salzsäure oder Schwefelsäure verwenden. Als Oxidationsmittel kann man Kaliumchlorat, Natriumchlorat oder Wasserstoffsuperoxid einsetzen. Auch die Verwendung von Kalium- oder Natriumdichromat ist möglich.

Das Verhältnis der Kalium-Ionen zu den Natrium-Ionen, die in der ersten Phase bzw. in der zweiten Phase eingesetzt werden, kann 2 : 1 bis 1 : 5, vorzugsweise 1 : 1,5 bis 1 : 3 betragen.

Als Kaliumsalze können vor der Alterung z. B. Kaliumsulfat oder Kaliumchlorid verwendet werden. In einer Ausführungsform der Erfindung kann man für die Weißteigfällung in der ersten Phase unter Rühren in eine Vorlage aus Wasser gleichzeitig oder nacheinander wässrige Kaliumferrocyanidlösung und Eisen-II-sulfatlösung hinzugeben, anschließend in der zweiten Phase unter Rühren gleichzeitig oder nacheinander Natriumferrocyanid-Lösung und dieselbe Eisen-II-sulfatlösung wie in der ersten Phase hinzugeben.

Die Konzentration der Kaliumferrocyanidlösung kann 60 ± 40 g/l $[Fe(CN)_6]$ betragen.

Die Konzentration der Natriumferrocyanidlösung kann 60 ± 40 g/l $[Fe(CN)_6]$ betragen.

Die Konzentration der Eisen-II-sulfatlösung kann 200 ± 150 g/l $FeSO_4 \cdot 7\ H_2O$ betragen.

$[Fe(CN)_6]$ und $FeSO_4$ können im Molverhältnis 1 : 1,7 ± 0,2 eingesetzt werden.

Statt der Eisen-II-sulfatlösung kann auch eine Eisen-II-chlorid-Lösung eingesetzt werden.

Die Volumen von Wasservorlage und Fällösungen werden entsprechend den Konzentrationen der Lösungen gewählt. Die Weißteigkonzentration nach der Fällung kann 30 ± 20 g/l $[Fe(CN)_6]$ betragen.

Das Volumen der Wasservorlage kann 25 Vol.% bis 50 Vol.% des Gesamtvolumens der nach der Fällung vorliegenden Weißteigsuspension betragen.

Die gesamte Weißteigfällung kann so geführt werden, daß in dem Weißteigfiltrat ein Überschuß von 1,5 ± 0,5 g/l Fe vorhanden ist.

Die Zulaufgeschwindigkeit der Lösungen kann sich nach dem Volumen der Lösungen richten. Dabei kann die Einlaufzeit der Lösungen 60 ± 30 Minuten betragen, wobei das Verhältnis der Fällzeiten der ersten und zweiten Phase der Fällung dem Molverhältnis der Ferrocyanide entspricht.

Die Temperaturen der Wasservorlage und Fällösungen können von 15-70 °C variieren ; sie werden so aufeinander abgestimmt, daß die Weißteigfällung bei 40 ± 20 °C stattfindet.

Das Molverhältnis Kaliumferrocyanid : Natriumferrocyanid kann von 1 : 2 bis 2 : 1 variieren. Bevorzugt wird das Verhältnis 1 : 1,6 angewandt.

Die Menge Kaliumsulfat, die vor der Alterung des Weißteiges zugesetzt wird, kann von 0,1-2 Mol, vorzugsweise 0,5 bis 1 Mol $K_2SO_4$ pro Mol $[Fe(CN)_6]$ betragen und richtet sich danach, in welchem Verhältnis die Ferrocyanide zur Weißteigfällung eingesetzt werden. Das Kaliumsulfat kann als wässrige Lösung mit einer Konzentration von 100 ± 30 g/l oder als festes Salz zugegeben werden.

Bei dieser Ausführungsform der Erfindung kann man die Eisen-II-sulfatlösung vorlegen, wobei die Eisen-II-sulfatlösung dann eine Konzentration von 150 ± 100 g/l aufweisen kann.

In einer anderen Ausführungsform der Erfindung kann man für die Weißteigfällung in der ersten Phase unter Rühren in einem Reaktionsgefäß eine wässrige Lösung von Blausäure vorlegen, gleichzeitig wässrige Eisen-II-sulfatlösung und wässrige Kaliumhydroxidlösung hinzugeben und anschließend in der zweiten Phase gleichzeitig dieselbe wässrige Eisen-II-sulfatlösung wie in der ersten Phase und wässrige Natriumhydroxidlösung hinzugeben.

Bei dieser Ausführungsform der Erfindung kann man das Kaliumhydroxid durch Kaliumkarbonat und das Natriumhydroxid durch Natriumkarbonat ersetzen, wobei die Konzentration der Kaliumkarbonatlösung 150 ± 130 g/l $K_2CO_3$ und die Konzentration der Natriumkarbonatlösung 150 ± 130 g/l betragen kann.

Die Konzentration der wässrigen Eisen-II-sulfatlösung kann hierbei 200 ± 150 g/l betragen. Statt der Eisen-II-sulfatlösung kann man auch eine Eisen-II-chlorid-Lösung verwenden.

Die Konzentration der wässrigen Kaliumhydroxidlösung kann 200 ± 180 g/l betragen.

Die Konzentration der wässrigen Natriumhydroxidlösung kann 200 ± 180 g/l betragen.

Die Volumen der wässrigen HCN-Vorlage und der Fällösungen werden entsprechend den Konzentrationen der Lösungen ausgewählt.

Das Volumen der wässrigen HCN-Vorlage kann 25 Vol.% bis 50 Vol.% des Gesamtvolumens der nach der Fällung vorliegenden Weißteigsuspension betragen.

Die gesamte Weißteigfällung kann so geführt werden, daß in dem Weißteigfiltrat ein Überschuß von 1,5 ± 0,5 g/l Fe vorhanden ist. Die Weißteigkonzentration nach der Fällung kann 30 ± 20 g/l $[Fe(CN)_6]$ betragen.

Die Zulaufgeschwindigkeit der Lösungen richtet sich nach dem Volumen der Lösungen. Die Einlaufzeit der Lösungen kann 60 ± 30 Minuten betragen, wobei das Verhältnis der Fällzeiten der ersten und zweiten Phase der Weißteigfällung dem Molverhältnis der Alkalihydroxid- bzw. Carbonatlösungen entspricht.

Das Molverhältnis Kaliumhydroxid : Natriumhydroxid bzw. Kaliumcarbonat : Natriumcarbonat kann von 1 : 5 bis 2 : 1 variieren. Bevorzugt wird das Molverhältnis 1 : 3 angewandt.

Das Molverhältnis HCN : $FeSO_4$ kann 1 : 0,4 ± 0,1 betragen.

Die Menge Kaliumsulfat, die vor der Alterung des Weißteiges zugesetzt wird, kann 0,1-2,0 Mol, vorzugsweise 0,5 bis 1 Mol $K_2SO_4$ pro Mol $[Fe(CN)_6]$ betragen und richtet sich danach, in welchem Verhältnis die Alkalihydroxide zur Weißteigfällung eingesetzt werden. Dabei kann das Kaliumsulfat als wässrige Lösung mit einer Konzentration von 100 ± 30 g/l oder als festes Salz zugegeben werden.

Die zweiphasige Weißteigfällung gemäß Erfindung kann man auch durchführen, indem man in einem Reaktionsbehälter Wasser vorlegt, in der ersten Phase gleichzeitig wässrige Eisen-II-sulfatlösung und wässrige Kaliumcyanid-Lösung hinzugibt und anschließend in der zweiten Phase unter weiterem Rühren gleichzeitig dieselbe wässrige Eisen-II-sulfatlösung wie in der ersten Phase und wässrige Natriumcyanid-Lösung hinzugibt.

Die Konzentration der wässrigen Eisen-II-sulfatlösung, die in der ersten oder zweiten Phase zugesetzt wird, kann 200 ± 150 g/l betragen. Statt der Eisen-II-sulfatlösung kann man auch eine Eisen-II-chloridlösung einsetzen.

Die Konzentration der wässrigen Kaliumcyanidlösung kann 200 ± 180 g/l betragen.

Die Konzentration der wässrigen Natriumcyanidlösung kann 200 ± 180 g/l betragen.

Die Volumen der Wasser-Vorlage und der Fällösungen werden entsprechend den Konzentrationen der Lösungen gewählt. Die Weißteigkonzentration nach der Fällung kann 30 ± 20 g/l $[Fe(CN)_6]$ betragen.

Das Volumen der Wasservorlage kann 25 Vol.% bis 50 Vol.% des Gesamtvolumens der nach der Fällung vorliegenden Weißteigsuspension betragen.

Die gesamte Weißteigfällung kann so geführt werden daß im Weißteigfiltrat ein Überschuß von 1,5 ± 0,5 g/l Fe vorhanden ist.

Die Zulaufgeschwindigkeit der Lösungen richtet sich nach dem Volumen der Lösungen. Die Einlaufzeit der Lösungen kann dabei 60 ± 30 Minuten betragen, wobei das Verhältnis der Fällzeiten des ersten und zweiten Teiles der Weißteigfällung dem Molverhältnis der Cyanidlösungen entspricht.

Das Molverhältnis Kaliumcyanid : Natriumcyanid kann von 1 : 5 bis 2 : 1 variieren.

Bevorzugt wird das Molverhältnis 1 : 3 angewandt.

Das Molverhältnis CN zu $FeSO_4$ kann 1 : 0,4 ± 0,1 betragen.

Die Menge Kaliumsulfat, die vor der Alterung des Weißteiges zugesetzt wird, kann 0,1-2,0 Mol, vorzugsweise 0,5 bis 1 Mol $K_2SO_4$ betragen und richtet sich danach, in welchem Verhältnis die Cyanide zur Weißteigfällung eingesetzt werden. Dabei kann man das kaliumsulfat als wässrige Lösung mit einer Konzentration von 100 ± 30 g/l oder als festes Salz zugeben.

In einer weiteren Ausführungsform der Erfindung kann man für die Weißteigfällung in der ersten Phase unter Rühren in eine Vorlage aus Wasser, in dem gegebenenfalls $FeSO_4$ gelöst ist, gleichzeitig oder nacheinander wässrige Eisen-II-sulfatlösung und eine wässrige Lösung von Kaliumferrocyanid und Kaliumsulfat hinzugeben und anschließend in der zweiten Phase unter weiterem Rühren gleichzeitig oder nacheinander dieselbe Eisen-II-sulfatlösung wie in der ersten Phase und eine wässrige Lösung von Natriumferrocyanid und Natriumsulfat hinzugeben.

Die Konzentration der Eisen-II-sulfatlösung kann 200 ± 159 g/l $FeSO_4 \cdot 7\,H_2O$ betragen. Statt der Eisen-II-sulfatlösung kann man auch eine Eisen-II-chloridlösung verwenden.

Das Molverhältnis Kaliumferrocyanid zu Kaliumsulfat in der $[Fe(CN)_6]$-lösung kann von 1 : 0,5 bis 1 : 1,5, vorzugsweise 1 : 1 betragen. Dabei kann die Konzentration an $[Fe(CN)_6]$60 ± 40 g/l betragen.

Das Molverhältnis Natriumferrocyanid zu Natriumsulfat in der $[Fe(CN)_6]$-lösung kann von 1 : 0,5 bis 1 : 1,5, vorzugsweise 1 : 1 betragen. Dabei kann die Konzentration an $[Fe(CN)_6]$ 60 ± 40 g/l betragen.

Die Volumen von Wasservorlage und Fällösungen werden entsprechend den Konzentrationen der Lösungen gewählt. Die Weißteigkonzentration nach der Fällung kann 30 ± 20 g/l $Fe(CN)_6$ betragen. Das Volumen der Wasservorlage kann 25 Vol.% bis 50 Vol.% des Gesamtvolumens der nach der Fällung vorliegenden Weißteigsuspension betragen.

Die gesamte Weißteigfällung kann so geführt werden daß in dem Weißteigfiltrat ein Überschuß von 1,5 ± 0,5 g/l Fe vorhanden ist.

Die Zulaufgeschwindigkeit der Lösungen richtet sich nach dem Volumen der Lösungen.

Die Einlaufzeit der Lösungen kann 60 ± 30 Minuten betragen, wobei das Verhältnis der Fällzeiten der ersten und zweiten Phase der Fällung dem Molverhältnis der Ferrocyanide entspricht.

Die Temperaturen der Fällösungen können von 15-75 °C variieren, sie werden so aufeinander abgestimmt, daß die Weißteigfällung bei Temperaturen von 40 ± 20 °C stattfinden.

Das Molverhältnis Kaliumferrocyanid zu Natriumferrocyanid kann von 1 : 5 bis 2 : 1 variieren. Bevorzugt wird das Molverhältnis 1 : 3 angewandt.

$[Fe(CN)_6]$ und $FeSO_4 \cdot 7H_2O$ können im Molverhältnis 1 : 1,7 ± 0,2 eingesetzt werden.

Die Menge Kaliumsulfat, die vor der Alterung des Weißteiges zugesetzt wird, kann 0,1-2,0 Mol, vorzugsweise 0,5 bis 1 Mol $K_2SO_4$ pro Mol $[Fe(CN)_6]$ betragen und richtet sich danach, in welchem

Verhältnis die Ferrocyanide zur Weißteigfällung eingesetzt werden. Dabei kann man das Kaliumsulfat als wässrige Lösung mit einer Konzentration von 100 ± 30 g/l oder als festes Salz zugeben.

In einer weiteren Ausführungsform der Erfindung kann ein kleiner Teil des Ferrosulfat, z. B. 10 % ± 5 % der Gesamtmenge, in der Wasservorlage gelöst werden. Es kann auch die gesamte Ferrosulfatlösung vorgelegt werden, wobei die Eisen-II-sulfatlösung dann eine Konzentration von 150 ± 100 g/l aufweisen kann.

Als Eisensalze kann man dabei statt $FeSO_4$ auch $FeCl_2$ verwenden.

Die weitere Verarbeitung des Weißteiges zu dem Eisenblau-Pigment erfolgt nach bekannten Verfahren.

Die Alterung kann nach DE-PS 11 88 232 im Autoklaven erfolgen. Es ist aber auch möglich, den Weißteig unter Normaldruck zu kochen.

Die anschließende Oxidation erfolgt im sauren Medium nach Zusatz von einer wässrigen Lösung einer anorganischen Säure, wie z. B. HCl oder $H_2SO_4$, mit bekannten Oxidationsmitteln, wie z. B. Natriumchlorat, Kaliumchlorat, Wasserstoffperoxid, Kalium- oder Natriumdichromat.

Nach der Oxidation werden die Umsetzsalze entweder durch Dekantieren der Eisenblau-Pigmentsuspension oder im Anschluß an die Filtration der Eisenblau-Pigmentsuspension durch Waschen des Eisenblau-Pigmentfilterkuchens in der Filterpresse entfernt. Der Eisenblaupigmentfilterkuchen wird getrocknet und zu Pulver vermahlen.

Es ist ebenso möglich, den wässrigen Filterkuchen des Eisenblau-Pigments direkt in Bindemittel einzuarbeiten. Derartige Verfahren sind beispielsweise unter dem Namen Flushingverfahren bekannt.

Durch das erfindungsgemäße Verfahren ist es möglich, die Einsatzmenge des teuren Kaliumferrocyanides wesentlich zu senken, wobei die hergestellten Eisenblau-Pigmente alle erforderlichen guten Eigenschaften haben und dadurch die auf dem Markt befindlichen Eisenblau-Pigmente qualitativ übertreffen.

Der Erfindung liegt der Gedanke zugrunde, einen bestimmten Teil des Weißteiges in Abwesenheit von Natriumionen zu fällen, um für die Anwendung des Eisenblau-Pigmentes erforderliche Teilchenform, Teilchengröße und chemische Zusammensetzung zu erzielen.

Die wesentliche Änderung der Weißteigfällung gegenüber den bekannten Verfahren besteht darin, daß nicht Mischungen aus Kalium- und Natriumferrocyanidlösungen zur Weißteigfällung eingesetzt werden, sondern die Lösungen nacheinander zur Fällung gelangen.

Zuerst wird beispielsweise Weißteig aus Kaliumferrocyanid und Eisensalzlösung gefällt und auf diesen Niederschlag erfolgt in Anwesenheit der in Lösung vorliegenden Umsetzsalze im gleichen Reaktionsgefäß die Fällung aus Natriumferrocyanid und Eisensalzlösung.

Die Menge Kaliumferrocyanid bzw. der Weißteiganteil, der aus Kaliumferrocyanid gefällt wird, ist so bemessen, daß gerade soviel Kaliumionen eingesetzt werden, wie notwendig sind, um nach der anschließenden Weißteigfällung aus Natriumferrocyanid die erforderliche Weißteigzusammensetzung zu erhalten.

Die bei der ersten Phase der Fällung aus Kaliumferrocyanid und Eisensalzlösung in Lösung verbleibenden Kaliumionen werden bei der anschließenden Fällung in der zweiten Phase aus Natriumferrocyanid fast vollständig umgesetzt. Nach beendeter Weißteigfällung enthält das Filtrat im wesentlichen Natriumionen.

Durch das erfindungsgemäße Verfahren ist es beispielsweise möglich, weniger Kaliumferrocyanid einzusetzen als bei bekannten Verfahren notwendig ist.

Die Erfindung gewinnt unter anderem an Bedeutung, wenn man als Rohstoff Ferrocyanidlösungen verwendet, die auf Grund ihrer Herstellung zusätzliche Alkalimetallionen enthalten.

Ferrocyanidlösungen mit hoher Alkalimetallionenkonzentration entstehen z. B. durch folgende Umsetzung :

$$6\,KCN + FeSO_4 \longrightarrow K_4[Fe(CN)_6] + K_2SO_4$$

oder

$$6\,NaCN + FeSO_4 \longrightarrow Na_4[Fe(CN)_6] + Na_2SO_4$$

Vorteilhaft ist, daß im Gegensatz zu anderen Methoden der Ferrocyanidherstellung bei dieser Reaktion keine Rückstände anfallen. Es treten keine Probleme bezüglich der Entsorgung cyanhaltiger Nebenprodukte auf.

Höhere Kaliumionenkonzentrationen verteuern die Lösung erheblich, sodaß auf der Basis Kaliumferrocyanid-Kaliumsulfat-Lösung im allgemeinen keine wirtschaftliche Eisenblaupigmentherstellung möglich wäre. Man ist deshalb gezwungen, zumindest einen Teil des Ferrocyanides als Natriumferrocyanid-Natriumsulfat-Lösung einzusetzen.

Wenn ein Teil des Ferrocyanides aus Natriumferrocyanid-Natriumsulfatlösung besteht, führt das bei allen bisher bekannten Herstellmethoden durch die hohe Natriumionenkonzentration zu Eisenblau-Pigmenten, die hohe Anforderungen der Verbraucher nicht erfüllen. Der Farbton dieser Eisenblau-

Pigmente weist nicht die erforderliche Reinheit auf. Die weiterhin auftretende schlechtere Dispergierung führt zu weniger glänzenden und farbschwachen Druckfarben.

Die Anwendung der erfindungsgemäßen Fällmethode ist beispielsweise bei Einsatz der beschriebenen Ferrocyanidlösungen, die zusätzlich Alkalimetallionen enthalten, von zweifachem Nutzen :

Es können auf diese Weise in jeder Hinsicht wertvolle Eisenblaupigmente hergestellt werden, und es werden durch optimale Ausnutzung der vorhandenen Kaliumionen die Rohstoffkosten verringert.

Nach dem erfindungsgemäßen Verfahren wird beispielsweise zuerst Weißteig aus Kaliumferrocyanid-Kaliumsulfat-Lösung gefällt. Bei Anwendung vorgenannter Lösung werden von den insgesamt vorhandenen 6 Kaliumionen pro Mol $[Fe(CN)_6]$ zunächst 25-30 % bei der Fällung umgesetzt. Die nicht in die Reaktion eingehenden Kaliumionen verbleiben in Lösung. Diese wertvolle Salzlösung wird bei der anschließenden Weißteigfällung aus Natriumferrocyanid-Natriumsulfat-Lösung und Eisensalzlösung weitgehend ausgenutzt, indem die Kaliumionen vorzugsweise mit $[Fe(CN)_6]$ reagieren, während die Natriumionen in Lösung bleiben.

Trotz der erhöhten Natriumionenkonzentration ist es überraschenderweise nach dem erfindungsgemäßen Verfahren beispielsweise möglich, das Verhältnis der Ferrocyansalze wesentlich zugunsten der billigeren Natriumferrocyanid-Natriumsufat-Lösung zu verändern.

Für die Praxis von noch größerer Bedeutung als die Vorteile einer wirtschaftlichen Rohstoffbasis ist die Tatsache, daß es nach dem erfindungsgemäßen Verfahren überraschenderweise erstmalig gelungen ist, aus den beschriebenen Ferrocyanid-Lösungen trotzt der wesentlich überwiegenden Menge an Natriumionen in jeder Hinsicht qualitativ hochwertige Eisenblau-Pigmente herzustellen.

Aus wirtschaftlichen Gründen ist man natürlich bestrebt, möglichst wenig Kalium zu verwenden. Es ist aber auch möglich und kann für Spezialpigmentsorten nützlich sein, überwiegend Kaliumferrocyanid einzusetzen.

Bei Verwendung von Ferrocyanidlösungen, die zusätzliche Alkalimetallionen enthalten, wird vorzugsweise das Molverhältnis Kaliumferrocyanid : Natriumferrocyanid 1 : 3 angewandt. 25 % Weißteig werden aus Kaliumferrocyanid-Kaliumsulfat-Lösung gefällt und anschließend 75 % Weißteig aus Natriumferrocyanid-Natriumsulfat-Lösung.

Der technische Fortschritt des Verfahrens besteht einmal darin, daß durch die neuartige Weißteigfällung die Menge Kalium bei der Blauherstellung insgesamt reduziert werden kann, wodurch Rohstoffkosten eingespart werden und die Einsenblau-Pigmente trotzdem alle charakteristischen Eigenschaften wertvoller Sorten haben. Außerdem können bei Anwendung des neuen Verfahrens als Ferrocyanide auch Natriumferrocyanidlösungen mit zusätzlichen erheblichen Mengen Natriumionen neben entsprechenden Kaliumferrocyanidlösungen eingesetzt werden und man erhält trotzdem besonders farbtonreine, farbstarke und sehr gut dispergierbare Eisenblaupigmente, die hochglänzende Tiefdruckfarben ergeben und besonders bei den in großen Mengen verwendeten blaupigmentierten Toluol-Tiefdruckfarben mehr Phthalocyaninblau ersetzen können als Eisenblau-Pigmente, die nach bisher bekannten Verfahren hergestellt werden. Nach dem Stand der Technik war die Herstellung dieser Eisenblau-Pigmente unter Anwendung dieser Natriumferrocyanidlösung nicht möglich.

Das erfindungsgemäße Verfahren wird anhand der folgenden Beispiele näher erläutert und beschrieben :

Die Prüfung der Eisenblaupigmente erfolgt in allen Beispielen nach derselben Methode. So wird die Anreibung und Ausmischung nach DIN 53 204 der Pigmentausreibemaschine und die Farbmessung der Aufstriche nach DIN 53 234 mit dem Farbmeßgerät Elrephomat DFC 5 durchgeführt.

Die Bestimmung der Farborte sowie der Farbdifferenzen wird nach DIN 6174 vorgenommen.

Das Vergleichspigment 1 wird nach bekannten Verfahren hergestellt, wobei Mischungen reiner Kalium-Natriumferrocyanide im Molverhältnis 1 : 1 und 0,5 Mol $K_2SO_4$ bei der Alterung verwendet werden.

Das Vergleichspigment 2 wird nach bekannten Verfahren hergestellt, wobei Mischungen von 1,0 bis 1,5 Mol Natrium-bzw. Kaliumsulfat enthaltenden Ferrocyanidlösungen im Molverhältnis 1 : 1 und 0,5 Mol $K_2SO_4$ bei der Alterung verwendet werden.

Die Prüfung der Dispergierbarkeit in Tiefdruckbindemittel sowie die Glanzmessung erfolgt in allen Beispielen nach der folgenden Methode :

1. Einwaage : in 250 ccm Glasflaschen mit Schraubdeckel

   300 g Stahlkugeln 3 mm ∅
   20 g Blaupulver
   64,5 g Tiefdruckbindemittel 50 %ig in Toluol
   40,5 g Toluol

2. Dispergierung : 120 Minuten in Schüttelmaschine « Red Devil »
3. Abzüge mit Handcoater auf Tiefdruckpapier
4. Glanzmessung mit Reflektometer Dr. Lange (Restglanz in %)

Die Prüfung der Reaktionsfähigkeit erfolgt in allen Beispielen nach der folgenden Methode :

40 g Eisenblau-Pigment werden mit 60 g Leinölalkydharz/Lackleinöl 1 : 1 angeteigt und auf der Dreiwalze dispergiert (3 Passagen). Die Verteilung wird mit dem Grindometer überprüft, Feinheit unter 5 μ.

Prüffarbe (25 % Eisenblau-Pigment) 90 g der angeriebenen Paste werden mit 54 g Leinölalkydharz/Lackleinöl vermischt und nochmals über die Dreiwalze gegeben.

Die Prüfung der Viskosität erfolgt in allen Beispielen nach Höppler.

1. Messung nach 15-30 Minuten Temperierzeit bei 20 °C.

2. Messung nach 22 Stunden Alterung bei 50 °C und anschließend 15-30 Minuten Temperierzeit bei 20 °C.

Die Reaktionsfähigkeit des Eisenblau-Pigmentes ergibt sich aus dem Viskositätsanstieg der zweiten Messung, errechnet in %, bezogen auf die erste Messung.

## Beispiel 1

In einem Reaktionsgefäß werden 5 Liter Wasser vorgelegt und auf eine Temperatur von 40 °C aufgeheizt. Innerhalb von 15 Minuten werden under Rühren folgende Lösungen gleichzeitig in die Wasservorlage eingeführt :

1 700 ccm Kaliumferrocyanidlösung
Konzentration 85 g/l $[Fe(CN)_6]$
Temperatur 40 °C
1 450 ccm Eisen-II-sulfatlösung
Konzentration 200 g/l $FeSO_4 \cdot 7\,H_2O$
Temperatur 25 °C

Anschließend erfolgt innerhalb von 45 Minuten in den gefällten Weißteig unter Rühren der gleichzeitige Zulauf von

2 700 ccm Natriumferrocyanid-Lösung
Konzentration 85 g/l $[Fe(CN)_6]$
Temperatur 40 °C
2 200 ccm Eisen-II-sulfatlösung (Temperatur und Konzentration wie oben)

Die pH-Werte der Eisen-II-sulfatlösung und der $[Fe(CN)_6]$ Lösungen werden so eingestellt, daß das Fällprodukt einen pH-Wert von 3,0-3,5 aufweist.

Während der gesamten Weißteigfällung ist ein Überschuß von 1,5 g/l Fe im Weißteigfiltrat vorhanden.

Der Weißteig wird auf 18 000 ccm mit Wasser verdünnt und nach der Sedimentation das überstehende Wasser abgezogen.

Nach Zugabe von 153 g Kaliumsulfat als wässrige Lösung (Konzentration 130 g/l $K_2SO_4$) erfolgt die Alterung des Weißteiges gemäß DE-PS 11 88 232 im Autoklaven durch Erhitzen auf 110 °C. Die Temperatur von 110 °C wird 60 Minuten gehalten.

Nach Abkühlung auf 65 °C (unter Rühren) wird der Weißteig durch Zugabe von 90 g HCl (als 10-15 %ige wässrige Lösung) und 44 g $NaClO_3$ (als ca. 30 %ige wässrige Lösung) zu Eisenblau-Pigment oxidiert.

Die Ergebnisse der Prüfung des erhaltenen Eisenblau-Pigmentes sind in den Tabellen I und II zusammengefaßt.

(Siehe Tabellen Seite 8 ff.)

Tabelle I

Farbstärke, Farborte und Farbdifferenzen nach CIE-L*, a*, b*, C* mittels Elrephomat DFC 5
(Pigmentanreibung mit $TiO_2$ 1 : 20)

| Bezeichnung des Pigmentes | Farbstärke | | CIE-Farborte | | | | Farbdifferenzen | | | | Ergebnis |
|---|---|---|---|---|---|---|---|---|---|---|---|
| | K/S-Wert | % | L* | a* | b* | C* | ΔL | Δa | Δb | ΔC | |
| Vergleichs-pigment 1) | 0,536959 | 100 % | 54,1 | -13,6 | -31,5 | 34,3 | 0 | 0 | 0 | 0 | Vergleich |
| Pigment nach Beispiel 1 | 0,564752 | 105 % | 53,4 | -13,3 | -32,2 | 34,9 | -0,7 | 0,2 | -0,8 | 0,6 | dunkler, blauer reiner |

Der Gehalt an Kalium beträgt 7,6 Gew.-% und der an Natrium 1,6 Gew.-%

Tabelle II

Verbesserungen bezüglich Rohstoff-Kosten und Pigmentqualität gegenüber dem Stand der Technik

| Bezeichnung des Pigments | Rohstoff-Einsatz Kali-Menge insgesamt | Farbstärke/Farbton | Dispergierbarkeit Tiefdruckbindemittel Restglanzmessung in% | Reaktionsfähigkeit Viskositätsanstieg in % |
|---|---|---|---|---|
| Vergleichspigment 1) | 3,0 Mol Kalium pro Mol $Fe(CN)_6$ | 100 % rein-blau* | 22 - 23 % | ca. 40 % |
| Pigment nach Beispiel 1 | 2,5 Mol Kalium pro Mol $Fe(CN)_6$ | 105 % rein-blau* | 30 - 35 % | ca. 40 % |

* bezieht sich auf Eisenblau-Farbton

Beispiel 1a

In einem Reaktionsgefäß werden 5 Liter Eisen-II-sulfatlösung vorgelegt (Konzentration 90 g/l $FeSO_4 \cdot 7 H_2O$) und auf eine Temperatur von 40 °C erhitzt.

In diese Lösung fließen unter Rühren zuerst innerhalb von 15 Minuten 1 700 ccm Kaliumferrocyanidlösung (Konzentration 85 g/l $[Fe(CN)_6]$, Temperatur 40 °C) und anschließend innerhalb von 45 Minuten 2 700 ccm Natriumferrocyanidlösung (Konzentration 85 g/l $[Fe(CN)_6]$, Temperatur 40 °C).

Die pH-Werte der Eisen-II-sulfatlösung und der $[Fe(CN)_6]$-Lösung werden so eingestellt, daß das Fällprodukt einen pH-Wert von 3,0-3,5 aufweist.

Die weitere Behandlung des Weißteiges erfolgt wie in Beispiel 1 angegeben. Bei der Prüfung des erhaltenen Eisenblau-Pigmentes werden die in den Tabellen I und II zu Beispiel 1 angegebenen Werte erhalten.

Beispiel 2

In einem geschlossenen Reaktionsgefäß werden 160 g HCN in 3 000 ccm Wasser mit einer Temperatur von 25 °C vorgelegt.

Innerhalb von 15 Minuten werden unter Rühren gleichzeitig folgende Lösungen eingeführt :

750 ccm Eisen-II-sulfatlösung
  Konzentration 200 g/l $FeSO_4 \cdot 7 H_2O$
  Temperatur 25 °C
750 ccm Kaliumhydroxidlösung
  Konzentration 110 g/l
  Temperatur 40 °C

Der pH-Wert der Eisen-II-sulfatlösung wird so eingestellt, daß das Fällprodukt einen pH-Wert von 3,5-4,0 aufweist.

Anschließend erfolgt innerhalb von 45 Minuten in den gefällten Weißteig unter Rühren der gleichzeitige Zulauf von 2 250 ccm Eisen-II-sulfatlösung, (Konzentration pH-Wert und Temperatur wie oben).

2 250 ccm Natriumhydroxidlösung
  Konzentration 80 g/l
  Temperatur 40 °C

Während der gesamten Weißteigfällung ist ein Überschuß von 1,5 g/l Fe im Weißteigfiltrat vorhanden.

Der Weißteig wird auf 18 000 ccm mit Wasser verdünnt und nach der Sedimentation das überstehende Wasser abgezogen, nochmals mit Wasser auf 18 000 ccm verdünnt und nach der Sedimentation des Weißteiges die überstehende Lösung wiederum abgezogen.

Nach Zugabe von 87 g Kaliumsulfat als wässrige Lösung (Konzentration 130 g/l) erfolgt die Alterung des Weißteiges gemäß DE-PS 11 88 232 im Autoklaven durch Erhitzen auf 105 °C. Die Temperatur von 105 °C wird während 60 Minuten gehalten.

Nach Abkühlung unter Rühren auf 65 °C wird der Weißteig durch Zugabe von 50 g HCl als 15 %ige wässrige Lösung und 25 g Natriumchlorat (als 30 %ige wässrige Lösung) zu Eisenblau-Pigment oxidiert.

Die Ergebnisse der Prüfung der erhaltenen Eisenblau-Pigmente sind in den Tabellen III und IV zusammengefaßt.

(Siehe Tabellen Seite 11 ff.)

Tabelle III

Farbstärke, Farborte und Farbdifferenzen nach CIE-L*, a*, b*, C* mittels Elrephomat DFC 5 (Pigmentanreibung mit $TiO_2$ 1 : 20)

| Bezeichnung des Pigmentes | Farbstärke K/S-Wert | % | CIE-Farborte l* | a* | b* | C* | ΔL | Farbdifferenzen Δa | Δb | ΔC | Ergebnis |
|---|---|---|---|---|---|---|---|---|---|---|---|
| Vergleichs-pigment 1) | 0,536959 | 100 % | 54,1 | -13,6 | -31,5 | 34,3 | 0 | 0 | 0 | 0 | Vergleich |
| Vergleichs-pigment 2) | 0,526220 | 98 % | 54,4 | -12,8 | -30,9 | 33,7 | 0,3 | 0,8 | 0,6 | -0,6 | roter, gelber schmutziger |
| Pigment nach Beispiel 2 | 0,564752 | 105 % | 53,4 | -13,3 | -32,3 | 34,9 | -0,7 | 0,2 | -0,8 | 0,6 | dunkler, blauer reiner |

Der Gehalt an Kalium beträgt 8,5 Gew.-% und der an Natrium 1,2 Gew.-%

Tabelle IV

Verbesserung bezüglich Rohstoff-Kosten und Pigmentqualität gegenüber dem Stand der Technik

| Bezeichnung des Pigmentes | Rohstoff-Einsatz Kali-Menge insge- | Farbstärke/Farbton | Dispergierbarkeit Tiefdruckbindemittel Restglanzmessung in% | Reaktionsfähigkeit Viskositätsanstieg in % |
|---|---|---|---|---|
| Vergleichs-pigment 1) | 3,0 Mol Kalium pro Mol $Fe(CN)_6$ | 100 % rein-blau* | 22-23 % | ca. 40 % |
| Vergleichs-pigment 2) | 4,0 Mol Kalium pro Mol $Fe(CN)_6$ | 98 % deutl. roter und schmutziger | 19-20 % | ca. 40 % |
| Pigment nach Beispiel 2 | 2,5 Mol Kalium pro Mol $Fe(CN)_6$ | 105 % rein-blau* | 30-35 % | ca. 40 % |

*bezieht sich auf Eisenblau-Farbton

Beispiel 3

In einem geschlossenen Reaktionsgefäß werden 3 000 ccm Wasser einer Temperatur von 40 °C vorgelegt.

Innerhalb von 15 Minuten werden unter Rühren gleichzeitig folgende Lösungen eingeführt :

750 ccm Eisen-II-sulfatlösung
Konzentration 200 g/l $FeSO_4 \cdot 7 H_2O$
Temperatur 25 °C
750 ccm Kaliumcyanidlösung
Konzentration 130 g/l KCN
Temperatur 25 °C

Anschließend erfolgt innerhalb von 45 Minuten in den gefällten Weißteig unter Rühren der gleichzeitige Zulauf von

2 250 ccm Eisen-II-sulfatlösung
Konzentration und Temperatur wie oben
2 250 ccm Natriumcyanidlösung
Konzentration 100 g/l NaCN
Temperatur 25 °C

Die pH-Werte der Eisen-II-salzlösung und der Cyanid-Lösungen werden so eingestellt, daß das Fällprodukt einen pH-Wert von 3,5-4,0 aufweist.

Während der gesamten Weißteigfällung ist ein Überschuß von 1,5 g/l Fe im Weißteigfiltrat vorhanden.

Der Weißteig wird auf 18 000 ccm mit Wasser verdünnt. Nach der Sedimentation wird die überstehende Lösung abgezogen, nochmals mit Wasser auf 18 000 ccm verdünnt und nach der Sedimentation des Weißteiges die überstehende Lösung wiederum abgezogen.

Nach Zugabe von 87 g Kaliumsulfat als wässrige Lösung (Konzentration 130 g/l) erfolgt die Alterung des Weißteiges gemäß DE-PS 11 88 232 im Autoklaven durch Erhitzen auf 110 °C. Die Temperatur von 110 °C wird während 60 Minuten gehalten.

Nach Abkühlung unter Rühren auf 65 °C wird der Weißteig durch Zugabe von 50 g HCl als 10-15 %ige wässrige Lösung und 25 g Natriumchlorat (als 30 %ige wässrige Lösung) zu Berliner Blau oxidiert.

Die Ergebnisse der Prüfung der erhaltenen Eisenblau-Pigmente sind in den Tabellen V und VI zusammengefaßt.

(Siehe Tabellen Seite 14 ff.)

Tabelle V

Farbstärke, Farborte und Farbdifferenzen nach CIE-L*, a*, b*, C* mittels Elrephomat DFC 5
(Pigmentanreibung mit $TiO_2$ 1 : 20)

| Bezeichnung des Pigmentes | Farbstärke K/S - Werte | % | CIE-Farborte L* | a* | b* | C* | Farbdifferenzen ΔL | Δa | Δb | ΔC | Ergebnis |
|---|---|---|---|---|---|---|---|---|---|---|---|
| Vergleichs-pigment 1) | 0,536959 | 100 % | 54,1 | -13,6 | -31,5 | 34,3 | 0 | 0 | 0 | 0 | Vergleich |
| Vergleichs-pigment 2) | 0,526220 | 98 % | 54,4 | -12,8 | -30,9 | 33,7 | 0,3 | 0,8 | 0,6 | -0,6 | roter, gelber schmutziger |
| Pigment nach Beispiel 3 | 0,564752 | 105 % | 53,4 | -13,3 | -32,3 | 34,9 | -0,7 | 0,2 | -0,8 | 0,6 | dunkler, blauer reiner |

Der Gehalt an Kalium beträgt 8,0 Gew.-% und der an Natrium 1,5 Gew.-%

Tabelle VI

Verbesserungen bezüglich Rohstoff-Kosten und Pigmentqualität gegenüber dem Stand der Technik

| Bezeichnung des Pigmentes | Rohstoff-Einsatz Kali-Menge insgesamt | Farbstärke/Farbton | Dispergierbarkeit Tiefdruckbindemittel Restglanzmessung in% | Reaktionsfähigkeit Viskositätsanstieg in % |
|---|---|---|---|---|
| Vergleichs-pigment 1) | 3,0 Mol Kalium pro Mol $Fe(CN)_6$ | 100 % rein-blau* | 22 - 23 % | ca. 40 % |
| Vergleichs-pigment 2) | 4,0 Mol Kalium pro Mol $Fe(CN)_6$ | 98 % deutl. roter und schmutziger | 19 - 20 % | ca. 40 % |
| Pigment nach Beispiel 3 | 2,5 Mol Kalium pro Mol $Fe(CN)_6$ | 105 % rein-blau* | 30 - 35 % | ca. 40 % |

* bezieht sich auf Eisenblau-Farbton

Beispiel 4

In einem Reaktionsgefäß werden 5 Liter Wasser vorgelegt und auf eine Temperatur von 40 °C aufgeheizt. Innerhalb von 15 Minuten werden unter Rühren folgende wässrige Lösungen gleichzeitig in die Wasservorlage eingeführt :

500 ccm Eisen-II-sulfatlösung
Konzentration 350 g/l $FeSO_4 \cdot 7\,H_2O$
Temperatur 20 °C
1 100 ccm Kaliumferrocyanid-Kaliumsulfat-Lösung (Molver. 1 : 1)
Konzentration 85 g/l $[Fe(CN)_6]$
Temperatur 40 °C

Anschließend erfolgt innerhalb von 45 Minuten in den gefällten Weißteig unter Rühren der gleichzeitige Zulauf von

1 500 ccm Eisen-II-sulfatlösung (gleiche Konzentration und Temperatur wie oben)
3 300 ccm Natriumferrocyanid-Natriumsulfat-Lösung (Molverhältnis 1 : 1)
Konzentration 85 g/l $[Fe(CN)_6]$
Temperatur 40 °C

Die pH-Werte der Eisen-II-sulfatlösung und der $[Fe(CN)_6]$-Lösungen werden so eingestellt, daß das Fällprodukt einen pH-Wert von 3,0-3,5 aufweist.

Während der gesamten Weißteigfällung ist ein Überschuß von 1,5 g/l Fe im Weißteigfiltrat vorhanden.

Die Weißteigsuspension wird auf 18 000 ccm mit Wasser verdünnt. Nach der Sedimentation wird die überstehende Lösung abgezogen, nochmals mit Wasser auf 18 000 ccm verdünnt und nach der Sedimentation des Weißteiges die überstehende Lösung wiederum abgezogen.

Nach Zugabe von 153 g Kaliumsulfat als wässrige Lösung (Konzentration 130 g/l $K_2SO_4$) erfolgt die Alterung des Weißteiges gemäß DE-PS 11 88 232 im Autoklaven durch Erhitzen auf 110 °C. Die Temperatur von 100 °C wird 60 Minuten gehalten.

Nach Abkühlung auf 65 °C, unter Rühren, wird der Weißteig durch Zugabe von 90 g HCl (als 15 %ige wässrige Lösung) und 44 g NaClO (als 30 %ige wässrige Lösung) zu Berliner Blau oxidiert.

Nach der Oxidation wird die Eisenblau-Pigmentsuspension filtriert, ausgewaschen und der Filterkuchen getrocknet.

Beispiel 5

In einem Reaktionsgefäß werden 5 Liter Eisen-II-sulfatlösung vorgelegt (Konzentration 140 g/l $FeSO_4 \cdot 7\,H_2O$) und auf eine Temperatur von 40 °C erhitzt.

In diese Lösung fließen unter Rühren zuerst innerhalb von 15 Minuten 1 100 ccm Kaliumferrocyanid-Kaliumsulfatlösung (Molverhältnis 1 : 1, Konzentration 85 g/l $[Fe(CN)_6]$, Temperatur 40 °C), und anschließend innerhalb von 45 Minuten 3 300 ccm Natriumferrocyanid-Natriumsulfat-Lösung (Molverhältnis 1 : 1, Konzentration 85 g/l $[Fe(CN)_6]$, Temperatur 40 °C).

Die pH-Werte der Eisen-II-sulfatlösung und der $[Fe(CN)_6]$-Lösungen werden so eingestellt, daß das Fällprodukt einen pH-Wert von 3,0-3,5 aufweist.

Nach der Weißteigfällung beträgt die Fe-Konzentration im Filtrat 1,5 g/l Fe.

Die weitere Behandlung des Weißteiges erfolgt wie in Beispiel 4 angegeben.

Beispiel 6

Die Herstellung erfolgt wie in Beispiel 4, wobei aber die Temperatur Wasservorlage 18-20 °C und die Temperatur der Fällösung 20-22 °C beträgt.

Vor der Alterung werden 230 g Kaliumsulfat als wässrige Lösung (Konzentration 130 g/l) zugesetzt.

Beispiel 7

In einem Reaktionsgefäß werden 35 g $FeSO_4 \cdot 7\,H_2O$ gelöst in 5 000 ccm Wasser mit einer Temperatur von 18-20 °C vorgelegt.

Innerhalb von 20 Minuten werden unter Rühren gleichzeitig folgende Lösungen eingeführt :

2 500 ccm Eisen-II-sulfatlösung
Konzentration 110 g/l $FeSO_4 \cdot 7\,H_2O$
Temperatur 20 °C
2 530 ccm Kaliumferrocyanid-Kaliumsulfat-Lösung (Molverhältnis 1 : 1)
Konzentration 50 g/l $Fe(CN)_6$
Temperatur 20 °C

Anschließend erfolgt innerhalb von 40 Minuten in den gefällten Weißteig unter Rühren der gleichzeitige Zulauf von

5 000 ccm Eisen(II)sulfatlösung (Konzentration und Temperatur wie oben)
5 070 ccm Natriumferrocyanid-Natriumsulfat-Lösung (Molverhältnis 1 : 1)
Konzentration 50 g/l $Fe(CN)_6$
Temperatur 20 °C

Die pH-Werte der Eisen-II-sulfatlösung und der $[Fe(CN)_6]$-Lösungen werden so eingestellt, daß das Fällprodukt einen pH-Wert von 3,0-3,5 aufweist.

Während der gesamten Weißteigfällung ist ein Überschuß von 1,5 g/l Fe im Weißteigfiltrat vorhanden.

Nach der Sedimentation des Weißteiges wird die überstehende Lösung abgezogen, mit Wasser auf 18 000 ccm verdünnt und nach der Sedimentation des Weißteiges die überstehende Lösung wiederum abgezogen.

Nach Zugabe von 306 g Kaliumsulfat als wässrige Lösung (Konzentration 130 g/l) erfolgt die Alterung gemäß DE-PS 11 88 232 im Autoklaven durch Erhitzen auf 110 °C. Die Temperatur von 110 °C wird während 60 Minuten gehalten.

Nach Abkühlung auf 65 °C unter Rühren wird der Weißteig durch Zugabe von 90 g HCl (als 10-15 %ige Lösung) und 44 g Natriumchlorat (als 30 %ige Lösung) zu Berliner Blau oxidiert.

Nach der Oxidation wird die Eisenblau-Pigmentsuspension filtriert, ausgewaschen und der Filterkuchen getrocknet.

Die Ergebnisse der Prüfung der erhaltenen Eisenblau-Pigmente sind in den Tabellen VII und VIII zusammengefaßt :

(Siehe Tabellen Seite 18 ff.)

Tabelle VII

Verbesserung bezügliche Rohstoff-Kosten und Pigmentqualität gegenüber dem Stand der Technik

| Bezeichnung des Pigments | Rohstoff-Einsatz Kali-Menge insgesamt | Farbstärke/Farbton | Dispergierbarkeit Tiefdruckbindemittel Restglanzmessung in % | Reaktionsfähigkeit Viskositätsanstieg in % |
|---|---|---|---|---|
| Vergleichs-pigment 1) | 3,0 Mol Kalium pro Mol $Fe(CN)_6$ | 100 % rein-blau* | 22-23 % | ca. 40 % |
| Vergleichs-pigment 2) | 4,0 Mol Kalium pro Mol $Fe(CN)_6$ | 98 % deutl. roter und schmutziger | 19-20 % | ca. 40 % |
| Pigment nach Beispiel 4+5 | 2,5 Mol Kalium pro Mol $Fe(CN)_6$ | 105 % rein-blau* | 30-35 % | ca. 40 % |
| Pigment nach Beispiel 6 | 3,0 Mol Kalium pro Mol $Fe(CN)_6$ | 110 % rein-blau* | 30-35 % | ca. 50 % |
| Pigment nach Beispiel 7 | 4,0 Mol Kalium pro Mol $Fe(CN)_6$ | 115 % rein-blau* | Spezialpigment für die Lackindustrie Glanz im Tiefdruck und Reaktionsfähigkeit sind nicht von Interesse | |

*bezieht sich auf Eisenblau-Farbton

Tabelle VIII

Farbstärke, Farborte und Farbdifferenzen nach CIE-L*, a*, b*, C* mittels Elrephomat DFC 5 (Pigmentanreibung mit $TiO_2$ 1 : 20)

| Bezeichnung des Pigmentes | Farbstärke K/S-Werte | Farbstärke % | CIE-Farborte L* | CIE-Farborte a* | CIE-Farborte b* | CIE-Farborte C* | Farbdifferenzen ΔL | Farbdifferenzen Δa | Farbdifferenzen Δb | Farbdifferenzen ΔC | Ergebnis |
|---|---|---|---|---|---|---|---|---|---|---|---|
| Vergleichs-pigment 1) | 0,536959 | 100 % | 54,1 | -13,6 | -31,5 | 34,3 | 0 | 0 | 0 | 0 | Vergleich |
| Vergleichs-pigment 2) | 0,526220 | 98 % | 54,4 | -12,8 | -30,9 | 33,7 | 0,3 | 0,8 | 0,6 | -0,6 | roter, gelber schmutziger |
| Pigment nach Beispiel 4+5 | 0,564752 | 105 % | 53,4 | -13,3 | -32,2 | 34,9 | -0,7 | 0,2 | -0,8 | 0,6 | dunkler, blauer reiner |
| Pigment nach Beispiel 6 | 0,587970 | 110 % | 53,0 | -13,2 | -32,8 | 35,5 | -1,1 | 0,3 | -1,3 | 1,2 | dunkler, blauer reiner |
| Pigment nach Beispiel 7 | 0,616966 | 115 % | 53,0 | -13,3 | -33,2 | 35,7 | -1,1 | 0,3 | -1,7 | 1,4 | dunkler, blauer reiner |

Bei Beispiel 4 beträgt der Kaliumgehalt 8,2 Gew.-% und der Natriumgehalt 1,3 Gew.-%
Bei Beispiel 5 beträgt der Kaliumgehalt 8,2 Gew.-% und der Natriumgehalt 1,3 Gew.-%
Bei Beispiel 6 beträgt der Kaliumgehalt 8,5 Gew.-% und der Natriumgehalt 1,0 Gew.-%
Bei Beispiel 7 beträgt der Kaliumgehalt 9,0 Gew.-% und der Natriumgehalt 0,5 Gew.-%

**Ansprüche**

1. Eisenblau-Pigment, gekennzeichnet durch einen Gehalt an Kalium von 7,0 bis 9,0 Gew.-%, vorzugsweise 7,6 bis 9,0 Gew.-%, einen Gehalt an Natrium von 0,5 bis 2,0 Gew.-%, vorzugsweise 0,5 bis 1,5 Gew.-%, eine Farbstärke nach DIN 53 204 und DIN 53 234 von 5 bis 15 % über dem Standard Vossenblau 705 und die Farbabstände (bestimmt nach DIN 53 204 und DIN 53 234 in Verbindung mit DIN 6174 bezogen auf Vossenblau 705 als Standard):

$\Delta L$ : – 0,7 bis – 1,5
$\Delta a$ : – 0,5 bis + 0,3
$\Delta b$ : – 0,6 bis – 2,3
$\Delta C$ : + 0,5 bis + 2,0

2. Verfahren zur Herstellung des Eisenblau-Pigmentes gemäß Anspruch 1 mittels Weißteigfällung und nachfolgender Oxidation des Weißteiges, dadurch gekennzeichnet, daß man die Weißteigfällung unter Verwendung von Alkali-Ionen, Cyanid oder komplexen Eisencyanid-Ionen und Eisenionen in zwei Phasen durchführt, wobei man in der ersten Phase der Weißteigfällung als Alkali-Ionen Kalium-Ionen und in der zweiten Phase als Alkali-Ionen Natrium-Ionen zusetzt, die so erhaltene Weißteigsuspension mit Wasser verdünnt, die überstehende Lösung abdekantiert, Kaliumsalze hinzugibt, die Suspension bis zum Siedepunkt erhizt, diese Temperatur eine Zeit lang hält dann abkühlt, anorganische Säure in Form einer wässrigen Lösung und Oxidationsmittel in Form einer wässrigen Lösung hinzugibt, nach der Oxidation das Eisenblau-Pigment von der Lösung abtrennt und nach bekannten Verfahren aufarbeitet.

3. Verfahren nach Anspruch 2, dadurch gekennzeichnet, daß man für die Weißteigfällung in der ersten Phase unter Rühren in eine Vorlage aus Wasser gleichzeitig oder nacheinander wässrige Kaliumferrocyanidlösung und Eisen-II-sulfatlösung hinzugibt, anschließend in der zweiten Phase unter Rühren gleichzeitig oder nacheinander Natriumferrocyanid-Lösung und dieselbe wässrige Eisen-II-sulfatlösung wie in der ersten Phase hinzugibt.

4. Verfahren nach Anspruch 2, dadurch gekennzeichnet, daß man zur Weißteigfällung in der ersten Phase unter Rühren in einem Reaktionsgefäß eine wässrige Lösung von Blausäure vorlegt, gleichzeitig wässrige Eisen-II-sulfatlösung und wässrige Kaliumhydroxidlösung hinzugibt und anschließend in der zweiten Phase gleichzeitig dieselbe wässrige Eisen-II-sulfatlösung wie in der ersten Phase und wässrige Natriumhydroxidlösung hinzugibt.

5. Verfahren nach Anspruch 2, dadurch gekennzeichnet, daß man zur Weißteigfällung in der ersten Phase unter Rühren in einem Reaktionsgefäß Wasser vorlegt, gleichzeitig wässrige Eisen-II-sulfatlösung und wässrige Kaliumcyanidlösung hinzugibt, und anschließend in der zweiten Phase unter weiterem Rühren gleichzeitig dieselbe wässrige Eisen-II-sulfatlösung wie in der ersten Phase und wässrige Natriumcyanid-Lösung hinzugibt.

6. Verfahren nach Anspruch 2, dadurch gekennzeichnet, daß man zur Weißteigfällung in der ersten Phase unter Rühren in eine Vorlage aus Wasser, in dem gegebenenfalls $FeSO_4$ gelöst ist, gleichzeitig oder nacheinander wässrige Eisen-II-sulfatlösung und eine wässrige Lösung von Kaliumferrocyanid und Kaliumsulfat hinzugibt und anschließend in der zweiten Phase unter weiterem Rühren gleichzeitig oder nacheinander dieselbe Eisen-II-sulfatlösung wie in der ersten Phase und eine wässrige Lösung von Natriumferrocyanid und Natriumsulfat hinzugibt.

7. Verfahren nach Anspruch 2, dadurch gekennzeichnet, daß man zur Weißteigfällung in der ersten Phase unter Rühren in einem Reaktionsgefäß eine wässrige Lösung von Blausäure vorlegt, gleichzeitig wässrige Eisen-II-sulfatlösung und wässrige Kaliumcarbonatlösung hinzugibt und anschließend in der zweiten Phase gleichzeitig dieselbe wässrige Eisen-II-sulfatlösung wie in der ersten Phase und wässrige Natriumcarbonatlösung hinzugibt.

8. Verwendung des Eisenblau-Pigments gemäß Anspruch 1 zur Herstellung von Druckfarben, Buntfarben, Lackfarben und Farbmittel für Fungizide.

**Claims**

1. An iron-blue pigment, characterised by a content of potassium of from 7.0 to 9.0 % by weight, preferably from 7.6 to 9.0 % by weight, a content of sodium of from 0.5 to 2.0 % by weight, preferably from 0.5 to 1.5 % by weight, a colouring power according to DIN 53 204 and DIN 53 234 of from 5 to 15 % above the Vossenblau 705 standard, and the colour spacings (determined according to DIN 53 204 and DIN 53 234 in conjunction with DIN 6174, based on Vossenblau 705 as standard)

$\Delta L$ : – 0.7 to – 1.5
$\Delta a$ : – 0.5 to + 0.3
$\Delta b$ : – 0.6 to – 2.3
$\Delta C$ : + 0.5 to + 2.0

2. A process for the production of the iron-blue pigment according to claim 1 by means of white paste precipitation and subsequent oxidation of the white paste, characterised in that the white paste precipitation is carried out in two phases using alkali metal ions, cyanide or complex iron cyanide ions and iron ions, and in the first phase of the white paste precipitation, potassium ions are added as alkali metal ions and in the second phase, sodium ions are added as alkali metal ions, the white paste suspension thus obtained is diluted with water, the remaining solution is decanted, potassium salts are added, the suspension is heated to boiling point, this temperature is maintained for a time, the suspension is then cooled, inorganic acid in the form of an aqueous solution and oxidizing agent in the form of an aqueous solution are added, the iron-blue pigment is separated from the solution after oxidation and worked up according to known processes.

3. A process according to claim 2, characterised in that for the white paste precipitation in the first phase, aqueous potassium ferrocyanide solution and iron-II-sulphate solution are added with stirring, simultaneously or successively, to a starting solution of water, and then in the second phase, sodium ferrocyanide solution and the same aqueous iron-II-sulphate solution as in the first phase are added simultaneously or successively with stirring.

4. A process according to claim 2, characterised in that for the white paste precipitation in the first phase, an aqueous solution of hydrocyanic acid is introduced with stirring into a reaction vessel, aqueous iron-II-sulphate solution and aqueous potassium hydroxide solution are added simultaneously and then in the second phase, the same aqueous iron-II-sulphate solution as in the first phase and aqueous sodium hydroxide solution are simultaneously added.

5. A process according to claim 2, characterised in that for the white paste precipitation in the first phase, water is introduced into a reaction vessel with stirring, aqueous iron-II-sulphate solution and aqueous potassium cyanide solution are simultaneously added, and then in the second phase, the same aqueous iron-II-sulphate solution as in the first phase and aqueous sodium cyanide solution are simultaneously added with further stirring.

6. A process according to claim 2, characterised in that for the white paste precipitation in the first phase, aqueous iron-II-sulphate solution and an aqueous solution of potassium ferrocyanide and potassium sulphate are added with stirring, simultaneously or successively, to a starting solution of water in which $FeSO_4$ is optionally dissolved, and then in the second phase, the same iron-II-sulphate solution as in the first phase and an aqueous solution of sodium ferrocyanide and sodium sulphate are added simultaneously or successively with further stirring.

7. A process according to claim 2, characterised in that for the white paste precipitation in the first phase, an aqueous solution of hydrocyanic acid is introduced into a reaction vessel with stirring, aqueous iron-II-sulphate solution and aqueous potassium carbonate solution are simultaneously added, and then in the second phase, the same aqueous iron-II-sulphate solution as in the first phase and aqueous sodium carbonate solution are simultaneously added.

8. The use of the iron-blue pigment according to claim 1 for the production of printing colours, variegated colours, varnish colours and colouring agents for fungicides.

**Revendications**

1. Pigment bleu au fer, caractérisé par une teneur en potassium de 7 à 9 % en poids, de préférence 7,6 à 9 % en poids, une teneur en sodium de 0,5 à 2 % en poids, de préférence 0,5 à 1,5 % en poids, une puissance colorante selon DIN 53 204 et DIN 53 234, de 5 à 15 % supérieure au bleu « Vossen » Standard 705 et des écarts de coloration (déterminés selon DIN 53 204 et DIN 53 234 en relation avec DIN 6174, rapporté au Bleu « Vossen » 705 comme référence) :

$\Delta L$ : − 0,7 bis − 1,5
$\Delta a$ : − 0,5 bis + 0,3
$\Delta b$ : − 0,6 bis − 2,3
$\Delta C$ : + 0,5 bis + 2,0

2. Procédé d'obtention du pigment bleu au fer selon la revendication 1, par précipitation de pâte blanche et oxydation subséquente de la pâte blanche, procédé caractérisé en ce que la précipitation de la pâte blanche s'effectue, en utilisant des ions alcalins, des ions cyanures ou des ions complexes de ferrocyanure et des ions de fer, en deux phases, en ajoutant comme ions alcalins dans la première phase de précipitation de la pâte blanche, des ions potassium, et dans la deuxième phase, des ions sodium, que la suspension de pâte blanche ainsi obtenue est diluée à l'eau, la solution surnageant est évacuée, des sels de potassium sont ajoutés, la suspension est chauffée à son point d'ébullition, cette température est maintenue un certain temps, puis on refroidit, introduit des acides minéraux sous la forme d'une solution aqueuse, et un agent oxydant sous la forme d'une solution aqueuse, et qu'après l'oxydation, on sépare le pigment bleu au fer de la solution et le traite selon des procédés connus.

3. Procédé selon la revendication 2, caractérisé en ce que, pour la précipitation de la pâte blanche dans la première phase, on introduit sous agitation dans un récipient contenant de l'eau, simultanément

ou successivement, des solutions aqueuses de ferrocyanure de potassium et de sulfate de fer II, puis dans la deuxième phase, on introduit sous agitation simultanément ou successivement, une solution de ferrocyanure de sodium et la même solution aqueuse de sulfate de fer II que dans la première phase.

4. Procédé selon la revendication 2, caractérisé en ce que pour la précipitation de la pâte blanche dans la première phase, on dispose sous agitation dans un vase réactionnel, une solution aqueuse d'acide cyanhydrique, on introduit simultanément des solutions aqueuses de sulfate de fer II et d'hydroxyde de potassium et ensuite dans la deuxième phase, on introduit simultanément la même solution aqueuse de sulfate de fer II que dans la première phase, et une solution aqueuse d'hydroxyde de sodium.

5. Procédé selon la revendication 2, caractérisé en ce que, pour la précipitation de la pâte blanche dans la première phase, on dispose de l'eau dans un vase réactionnel, on introduit simultanément sous agitation des solutions aqueuses de sulfate de fer II et de cyanure de potassium, et ensuite dans la deuxième phase, tout en poursuivant l'agitation, on introduit simultanément la même solution aqueuse de sulfate de fer II que dans la première phase, et une solution aqueuse de cyanure de sodium.

6. Procédé selon la revendication 2, caractérisé en ce que, pour la précipitation de la pâte blanche, dans la première phase, on introduit sous agitation dans un récipient contenant de l'eau dans laquelle peut être dissous du $FeSO_4$, simultanément ou successivement, des solutions aqueuses de sulfate de fer II, et de ferrocyanure de potassium et sulfate de potassium, et ensuite dans la deuxième phase, en poursuivant l'agitation, on introduit simultanément ou successivement la même solution de sulfate de fer II que dans la première phase, et une solution aqueuse de ferrocyanure de sodium et sulfate de sodium.

7. Procédé selon la revendication 2, caractérisé en ce que, pour la précipitation de la pâte blanche, dans la première phase, on dispose dans un vase réactionnel, sous agitation, une solution aqueuse d'acide cyanhydrique, on introduit simultanément des solutions aqueuses de sulfate de fer II et de carbonate de potassium, et ensuite dans la deuxième phase, on introduit simultanément la même solution aqueuse de sulfate de fer II que dans la première phase et une solution aqueuse de carbonate de sodium.

8. Application du pigment bleu au fer selon la revendication 1 à la fabrication d'encres d'imprimerie, de peintures, de vernis et comme colorants pour les fongicides.